(19) **Europäisches Patentamt**
**European Patent Office**
**Office européen des brevets**

(11) **EP 2 143 067 B1**

(12) **EUROPEAN PATENT SPECIFICATION**

(45) Date of publication and mention
of the grant of the patent:
**21.08.2019 Bulletin 2019/34**

(51) Int Cl.:
**G06T 3/40** (2006.01)

(21) Application number: **08763044.8**

(22) Date of filing: **24.04.2008**

(86) International application number:
**PCT/IB2008/051575**

(87) International publication number:
**WO 2008/135880 (13.11.2008 Gazette 2008/46)**

(54) **AUTOMATIC DISPLAY OF SYMMETRIC ANATOMICAL STRUCTURE**

AUTOMATISCHE ANZEIGE SYMMETRISCHER ANATOMISCHER STRUKTUREN

AFFICHAGE AUTOMATIQUE DE STRUCTURE ANATOMIQUE SYMÉTRIQUE

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **04.05.2007 EP 07107492**

(43) Date of publication of application:
**13.01.2010 Bulletin 2010/02**

(73) Proprietor: **Koninklijke Philips N.V.**
**5656 AE Eindhoven (NL)**

(72) Inventor: **SONNEMANS, Jeroen, J.**
**NL-5656 AE Eindhoven (NL)**

(74) Representative: **van Velzen, Maaike Mathilde**
**Philips Intellectual Property & Standards**
**High Tech Campus 5**
**5656 AE Eindhoven (NL)**

(56) References cited:
**EP-A- 1 496 471      US-A1- 2003 018 250**
**US-A1- 2003 026 503      US-A1- 2005 259 882**
**US-A1- 2008 084 415**

• **anonymous: "Clinical ApplicationsApplication Guide syngo 3D", , January 2007 (2007-01), Retrieved from the Internet: URL:http://www.medical.siemens.com/siemens/en_GB/gg_ct_FBAs/files/CIP/appl_guides/sensation/CTsyngo_CT2007S_Sensation16_Applic ationsGuide_ClinicalAppl.pdf [retrieved on 2012-11-15]**

EP 2 143 067 B1

**Description**

The invention relates to method for displaying within a display area a symmetric anatomical structure which is a lung.

The invention further relates to a system for displaying within a display area a symmetric anatomical structure, which is a lung.

The invention further relates to a medical imaging workstation comprising such a system.

The invention further relates to a computer program product to be loaded by a computer arrangement, comprising instructions for displaying a symmetric anatomical structure within a display area.

An embodiment of such a method and system is known from article M. P. Revel, D. Petrover, A. Hernigou, C. Lefort, G. Meyer, G. Frija, Diagnosing Pulmonary Embolism with Four-Detector Row Helical CT: Prospective Evaluation of 216 Outpatients and Inpatients, Radiology, 234: 265-273, 2005. This article discloses analysis of the lung parenchyma and vasculature in Computed Tomography (CT) image data sets. For visualization, a user must select the Field of View (FOV) for each parenchyma separately through panning and zooming interactions with the images. This must be performed for each slice within the stack of image slices of which the image data set consists. The FOV must also be selected manually when a user, such as a radiologist, wants to view both parenchyma at the same time within one view.

The lung parenchyma are an example of a symmetric anatomical structure within the human body. Other examples are: the legs and its vessel structure, for example visualized through a Magnetic Resonance (MR) peripheral angiography study. Yet another example is the head and its vessel structure, for example visualized through an MR carotid angiography study or the female breasts for example visualized through a Maximum Intensity Projection (MIP) of an MR breast study.

Determining a correct FOV is important for a radiologist who is interested in seeing high detail in the area of interest for determining a diagnosis. Consequently, a correct FOV may decrease reading time per study of a radiologist and thus supports the workflow within a medical care facility.

US 2005/0259882 relates to a method for an automatic mapping of geometric objects in digital medical images. In the method, a geometric object is mapped from a model image to a target image by means of a transformation calculated on the basis of a correspondence between an anchor object and a corresponding mapped object. The method can be applied in radiological image measurement in which a plurality of measurement points is mapped into an image onto their corresponding anatomical location. This can be performed for 3D images using measurement templates associated with specific slices in a 3D image. The placement of measurement points is speeded by first auto-zooming the region of interest (ROI) that comprises a measurement point to a larger or full resolution.

It is an object of the invention to provide a method, system, medical imaging workstation and computer program product according to the opening paragraph that determines a FOV in an improved way. To achieve this object, a method according to claim 1 for displaying within a display area a symmetric anatomical structure comprising two sub-structures that are substantially symmetrical to each other is suggested, wherein the anatomical structure is a lung and the sub-structures are the left and right lungs. By automatically calculating a FOV based upon the zoom-factor and the panning position, a lung is displayed without requiring user interaction. In this way, a radiologist can study the lung with the required detail in the area of interest. As the radiologist does not have to perform zooming and panning manually to determine the FOV, the reading time per lung decreases. Consequently, the workflow of the radiologist is improved.

By automatically calculating the FOV per slice, a user can navigate quickly through the stack of slices and study each slice with the required detail in the area of interest. The user interaction is minimal because there's no need for manually adjusting the FOV per slice thereby reducing the reading time per volumetric dataset and improving the workflow of a user such as a radiologist.

Sub-structures are the two parenchyma of a lung. By automatically calculating the FOV per sub-structure a user can easily navigate between different views of the same symmetrical anatomical structure. The FOV does not need to be determined manually per sub-structure which improves the workflow further.

In an embodiment of the method according to the invention, the zoom-factor and the panning position are calculated during import of the lung within a database. By calculating the FOV during import of the structure, the structure is displayed faster. This improves the reading time per study even further.

In a further embodiment of the method according to the invention, displaying the lung and/or the left and right lungs is automatically invoked through a user interface. By providing a dedicated user interface for displaying the structure with the automatically calculated FOV, the user is in control when to display the FOV and which structure to display with this FOV, i.e. the whole structure or the sub-structures.

To further achieve the object, a system according to claim 4 for displaying within a display area a symmetric anatomical structure comprising two sub-structures that are substantially symmetrical to each other is suggested, wherein the anatomical structure is a lung and the sub-structures are the left and right lungs.

Embodiments of the system according to the invention are described in claims 5 and 6.

To further achieve the object, a medical imaging workstation is suggested. The medical workstation comprises the system according to any of the claims 4-6.

To further achieve the object, a computer program product according to claim 8 to be loaded by a computer arrangement is suggested.

The same advantages are achieved with the system, the medical imaging workstation and the computer program product according to the invention as were described with respect to the method according to the invention.

These and other aspects of the invention will be apparent from and elucidated with reference to the embodiments described hereinafter as illustrated by the following Figures:

Figure 1 illustrates examples of symmetrical structures;

Figure 2 illustrates the method according to the invention in a schematic way;

Figure 3 illustrates segmented lung parenchyma as a stack of 2 D slices in a schematic way;

Figure 4 illustrates a histogram of the number of segmented voxels as a function of the x-position in a binary volumetric dataset;

Figure 5 illustrates a translation from computed object parameters to pan and zoom parameters;

Figure 6 illustrates a histogram for an MR breast study;

Figure 7a illustrates an example of a received data set;

Figure 7b illustrates the FOV optimized for both lungs;

Figure 7c illustrates the FOV optimized for the right lung;

Figure 7d illustrates the FOV optimized for the left lung;

Figure 8 illustrates a user interface for invoking the method according to the invention;

Figure 9 illustrates a system according to the invention in a schematic way.

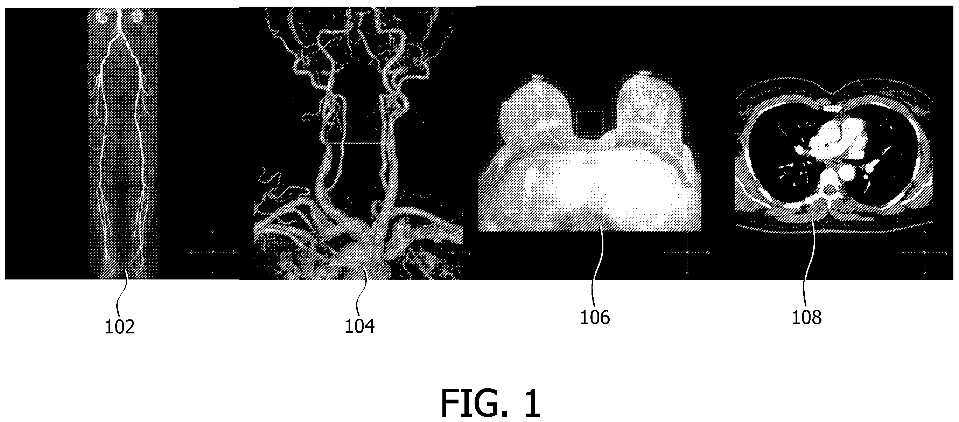

Figure 1 illustrates examples of symmetrical structures. The first symmetrical structure 102 are the leg arteries which can be visualized by a Maximum Intensity Projection (MIP) of a Magnetic Resonance (MR) angiography study. The second symmetrical structure 104 are the carotid arteries which can be visualized by an SVR (Shaded Volume Rendering) of an MR carotid angiography study. The third symmetrical structure 106 are the female breasts which can be visualized by a MIP of a MR breast study. The fourth structure 108 are the lungs which can be visualized by a Computed Tomography (CT) thorax study.

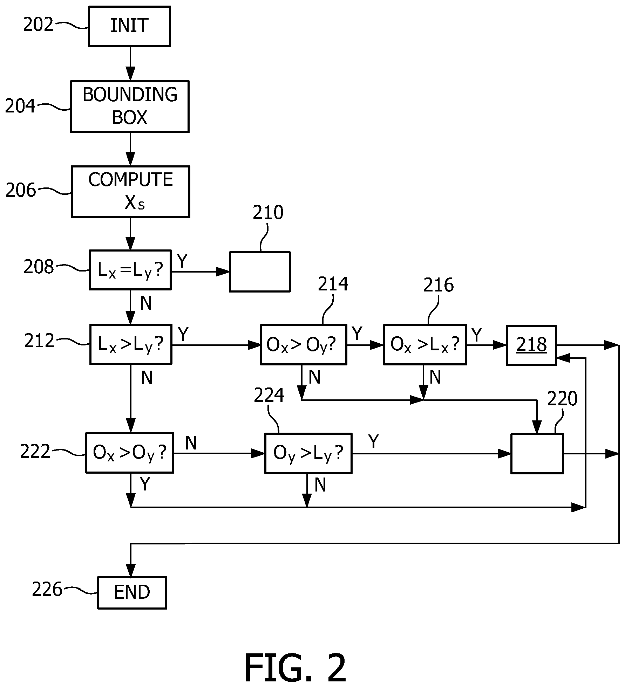

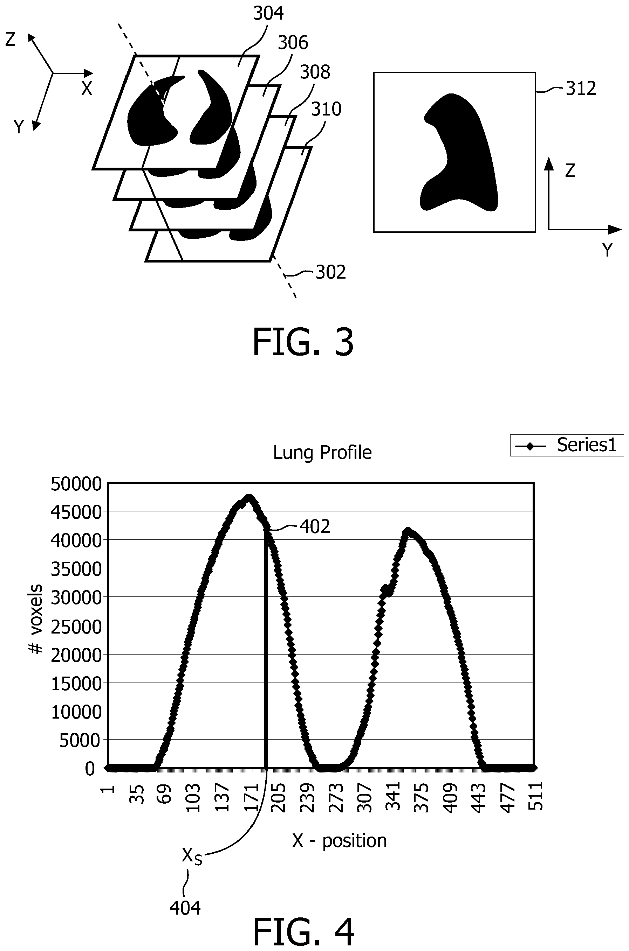

Figure 2 illustrates the method according to the invention in a schematic way. The step 202 is an initialization step in which the images are received. For example, a CT thorax study is received. This is a 3D volumetric image set which consists of slices of 2D images. The lung parenchyma are segmented from this volumetric image set by using for example a method as described in T. Bülow, R.Wiemker, T. Blaffert, C. Lorenz, S. Renisch, Automatic Extraction of the Pulmonary Artery Tree from Multi-Slice CT Data, SPIE, 5746: 730-740, 2005. This results in a, so called, binary volumetric dataset wherein voxels that contribute to the parenchyma have a value equal to 1 and voxels that do not contribute to the parenchyma have a value equal to 0. This is schematically visualized in Figure 3 as a stack 302 of 2 D slices 304, 306, 208, 310, and 312.

Within the next step 204, the segmentation boundaries in the x-and y dimension ($x_{min}$, $x_{max}$, $y_{min}$, $y_{max}$) that contain all parenchyma, i.e. voxels with value of 1, are determined from the binary volumetric dataset. This is also called the bounding box in x and y.

To set a Field of View (FOV) for either the left or the right lung, the binary volumetric dataset is processed to determine a separation position in between both lungs. To determine this separation position $x_s$, a lung profile is reconstructed by first going over the binary volumetric dataset in x-direction and second, for every x - position taking each corresponding yz-slice and counting the number of segmented voxels, i.e. voxels with value of 1 in this slice. The result is a graph as illustrated in Figure 4, which gives a histogram of the number of segmented voxels as a function of the x-position in the binary volumetric dataset. This histogram gives the profile p, 402. The separation position $x_s$ is determined between the two peaks, wherein each peak corresponds to one of the lungs. Computation of the separation position $x_s$ from the peaks is done in step 206. Here, the profile $p$ is smoothed with an averaging filter defined as

$$p_{smooth}(x) = \frac{1}{n} \sum_{x-n/2}^{x+n/2} p(n)$$

Here $n$ is the size of the averaging filter. Next, the linear derivative of the profile is computed by

$$\frac{dp_{smooth}(x)}{dx} = p_{smooth}(x) - p_{smooth}(x-1)$$

From the derivative of the profile all zero crossings are determined zc which are all points which satisfy the condition

$$zc \in \left( \frac{dp_{smooth}(x)}{dx} = 0 \vee \left( \frac{dp_{smooth}(x)}{dx} > 0 \wedge \frac{dp_{smooth}(x)}{dx} < 0 \right) \right)$$

Last, the most central zero crossing zc is accepted as the separation position $x_s$, 404.

The same technique can also be applied in 2D. This means the parameters ($x_{min}$, $x_{max}$, $x_s$, $y_{min}$, $y_{max}$) are computed for each separate slice. For a given segmentation slice 304 ($x_{min}$, $x_{max}$, $y_{min}$, $y_{max}$) are computed taking the segmentation boundary in x and y. The profile is generated by counting the number of voxels in y-direction for each x. After this, the same separation position $x_s$ computation can be applied as in the 3D case.

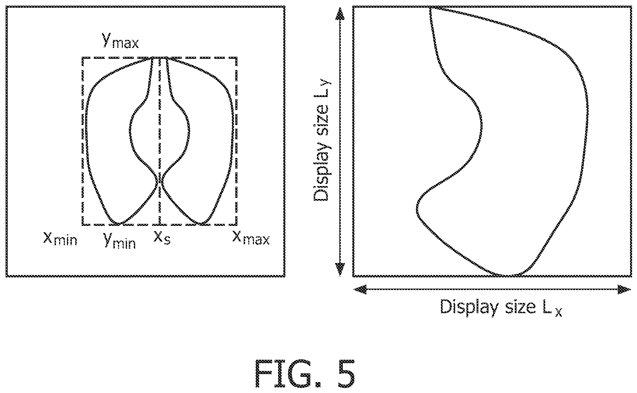

Within step 208, the computation of the (x, y) pan position and (x, y) zoom factor starts for each slice from the resulting separation position $x_s$. Given computed values (either from 3D or 2D) of ($x_{min}$, $x_{max}$, $x_s$, $y_{min}$, $y_{max}$) for a given slice a pan and zoom factor is computed to fit the parenchyma in a display with size ($L_x$, $L_y$). This is illustrated in Figure 5 and is computed in the following way: first the origin for each factor is computed. For both parenchyma the origin is set to:

$$origin_{both} = \left\{ \frac{(y_{max} + y_{min})}{2}, \frac{(x_{max} + x_{min})}{2} \right\}$$

For the left parenchyma the origin is set to:

$$origin_{left} = \left\{ \frac{(y_{max} + y_{min})}{2}, \frac{(x_{min} + x_s)}{2} \right\}$$

For the right parenchyma the origin is set to:

$$origin_{right} = \left\{ \frac{(y_{max} + y_{min})}{2}, \frac{(x_{max} + x_s)}{2} \right\}$$

After setting the origin, the object dimensions must be computed $o_x$ and $o_y$ to the extent of the displayed area in order to zoom as much as possible while displaying the entire object. For the three separate cases the object dimension in x is defined as follows: for both parenchyma as

$$o_{x,both} = x_{max} - x_{min}$$

for the left parenchyma as

$$o_{x,left} = x_s - x_{min}$$

and for the right parenchyma as

$$o_{x,right} = x_{max} - x_s$$

The object size in y is defined as

$$o_y = y_{max} - y_{min}$$

The translation scheme from object size to display extent must cope with the aspect ratio of the display as follows. Further, within step 208 it is checked if $L_x = L_y$ ?

If the display sizes in x and y direction are equal to each other, then the Extends are computed in step 210 by setting the Extend in the x direction equal to the Extend in the y direction which is equal to the maximum of the origin in the x direction and the origin in the y direction:

$$\text{Extend}_x = \text{Extend}_y = \max(o_x, o_y)$$

Within step 212 it is checked if the Extend in the x direction is larger then the Extend in the y direction, i.e. $L_x > L_y$ ? If this is true, then within step 214 it is checked if the origin in the x direction is larger then the origin in the y direction, i.e. $o_x > o_y$ ? If this is true, then within step 216 it is checked if the origin in the x direction is larger then the display size in the x direction, i.e. $o_x > L_x$ ? If this is true then the Extends are computed in step 218 by setting the Extend in the x direction equal to the origin in the x direction and setting the Extend in the y direction equal to the Display Size in the y direction divided by the multiplication of the Display Size in the x direction and the origin in the x direction: $\text{Extend}_x = o_x$

$$\text{Extend}_y = L_y / L_x o_x .$$

If step 216 or step 214 evaluate to false, then the Extends are computed in step 220 by setting the Extend in the x direction equal to the division of the Display Size in the x direction by the Display Size in the y direction and multiplying the result by the origin in the y direction. The Extend in the y direction is then equal to the origin in the y direction:

$$\text{Extend}_x = \left( L_x / L_y \right) o_y$$

$\text{Extend}_y = o_y.$

If step 212 evaluates to false, then the Extend in the x direction is smaller then the Extend in the y direction, i. e. $L_x < L_y$. Then in step 222 it is checked if the origin in the x direction is larger then the origin in the y direction, i.e. $o_x > o_y$ ? If this is true then step 218 is performed. If step 222 evaluates to false, then it is checked in step 224 if the origin in the y direction is larger then the Display Size in the y direction, i.e. $o_y > L_y$ ?. If this is true then step 220 is performed. If step 224 evaluates to false, then step 218 is performed. The Extends determine the zoom factor and the origin determines the pan position and the method ends in step 226 in which the slices are shown accordingly.

This way the zoom factor and pan position are calculated for each slice. Now when a user wants to navigate through the set of slices, each slice is zoomed and panned automatically which enables fast reading of the study.

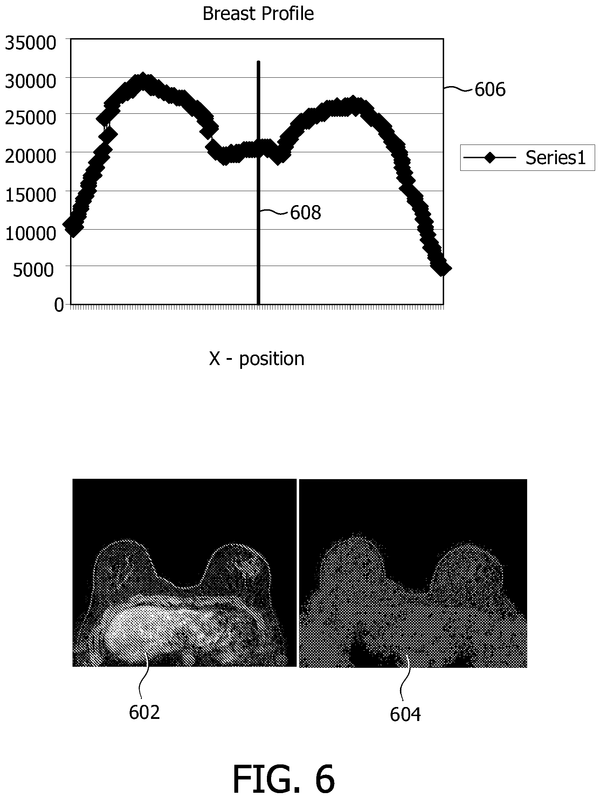

The method can for example also be applied to a Breast MR dataset as illustrated in Figure 6. Fig. 6 illustrates for instance the profile 606 and separation position 608 as obtained for a Breast MR dataset 602 and 604. Given a binary volume with a segmentation of each breast, the method can be applied.

Advantageously a reduction in the user interaction that is required for standard viewing of datasets containing symmetric anatomical structures is achieved. Also, when using this method according to the invention the interaction time is reduced. Not only is the zoom factor and pan position set correctly for the visible slice, but also for the non-visible slices. The only interaction left is scrolling through the axial slices after the FOV is set to either a view on one or both lungs. Although some computational cost is needed to determine the FOV's, this does not negatively influence the user workflow, since all FOV's can be pre-computed at the moment the data is imported into a database.

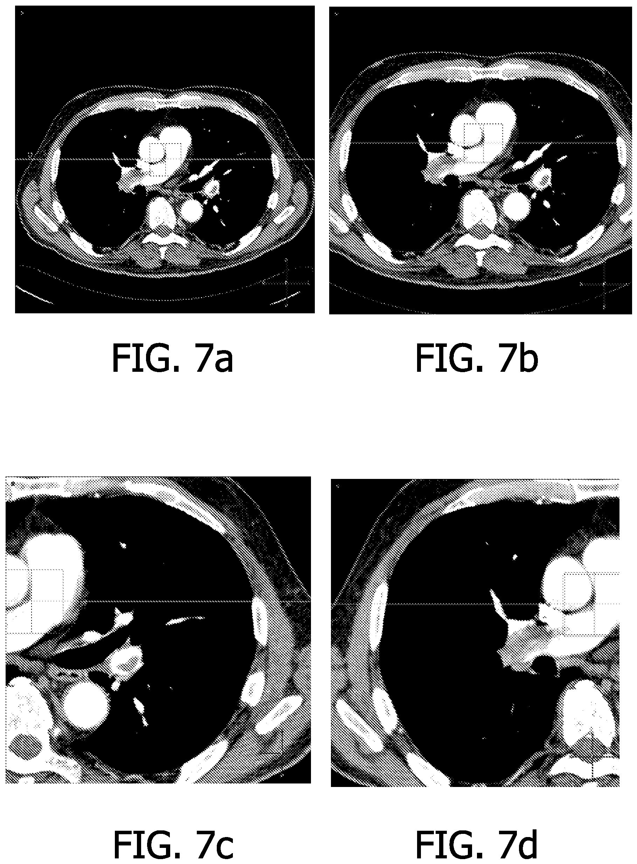

An example of a received data set prior to the application of the invention is illustrated in Figure 7a. Figure 7b illustrates the resulting 3D-based FOV for both lungs. Figure 7c illustrates the resulting FOV for the right lung and Figure 7d illustrates the resulting FOV for the left lung. As is illustrated in Figs. 7b to 7d, the FOV is set such that the lungs are covering the whole display area.

The method is applicable to all anatomies which can be represented by two binary objects after segmentation.

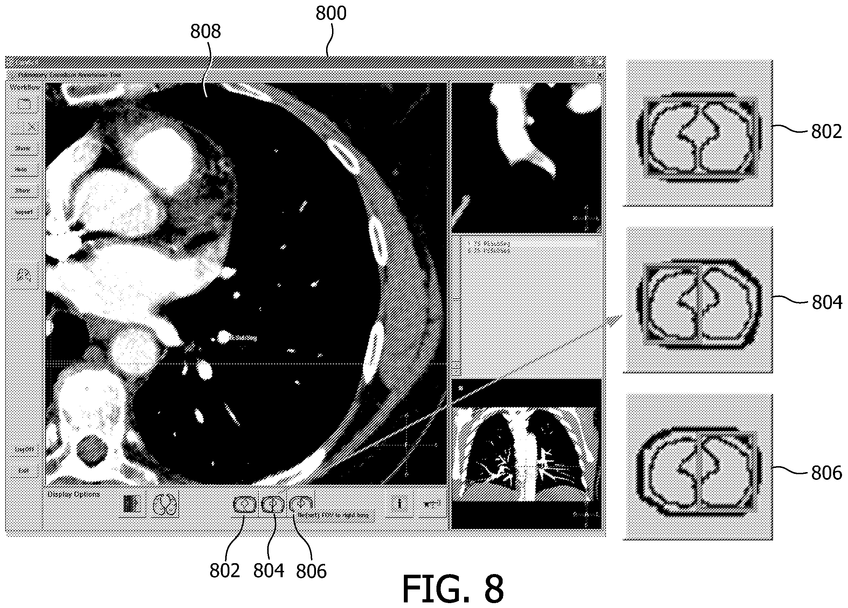

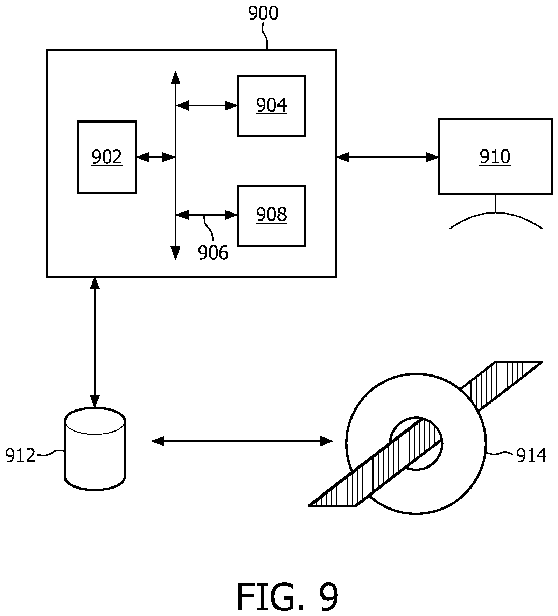

The proposed method can be implemented using buttons to set the FOV to one of the three presets. An example user interface 800 is given in Figure 8. Using button icons 802, 804, and 806, which graphically describe their purpose a user can easily switch between all three FOV's without any complicated viewer interaction. For example: pressing icon 802 will display a FOV covering both lungs in field 808. Pressing icon 804 will display a FOV covering the left lung and pressing icon 806 will display a FOV covering the right lung. Figure 9 illustrates a system according to the invention in a schematic way. The system 900 comprises a memory 902 that comprises computer readable software designed to perform the method according to the invention. The system 900 further comprises a central processing unit (cpu) 904 that is operatively connected to the memory 902 through software bus 906. The cpu 1004 performs the necessary calculations for executing the method according to the invention. The result is passed to display buffer 1008 which is operatively connected to display device 910. The data on which the method according to the invention is performed is retrieved from database 912 which is connected to a medical acquisition device 914 such as a CT scanner. The data that is acquired by the CT-scanner 914 from a person to be examined is sent to the database 912. The method according to the invention may be invoked during this import or for example by user interaction through display 910.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements, and by means of a suitably programmed computer. In the system claims enumerating several means, several of these means can be embodied by one and the same item of computer readable software or hardware. The mere fact that certain measures are recited in mutually different dependent claims does not indicate that a combination of these measures cannot be used to advantage.

## Claims

1.  A method for displaying within a display area (910) a symmetric anatomical structure (108) comprising two sub-structures that are substantially symmetrical to each other, wherein the anatomical structure is a lung and the sub-structures are the left and right lungs and wherein the lung is comprised within a 3D volumetric dataset comprising a stack of slices (302, 304, 306, 208, 310), the method comprising:

    segmenting parenchyma of the lung from the 3D volumetric data set to obtain a binary volumetric data set in which voxels contributing to the parenchyma of the lung have a first value and voxels not contributing to the parenchyma of the lung have a different second value;
    processing the binary volumetric dataset to determine a separation position in between the left and right lungs, the processing comprising generating a profile of the lung, which corresponds to a histogram of the number of voxels contributing to the parenchyma of the lung as a function of an x-position in the binary volumetric dataset, and determining the separation position between two peaks of the profile,
    automatically calculating a zoom-factor (210, 218, 220) for the lung for each slice of the stack of slices based upon the display area, wherein said automatically calculating a zoom-factor comprises automatically calculating a zoom-factor for each of the left and right lungs separately starting from the separation position; and

        - automatically calculating a panning position (206) for the lung for each slice of the stack of slices based upon the display area, wherein said automatically calculating a panning position comprises automatically calculating a panning position for each of the left and right lungs separately starting from the separation position;

    wherein the zoom-factor (210, 218, 220) and the panning position (206) for each of the left and right lungs are computed to fit the respective left or right lung in the display area and the zoom-factor for each of the left and right lungs is computed to zoom as much as possible while displaying the entire left or right lung; and
    wherein the method further comprises displaying the lung (108) according to the calculated zoom-factor and panning position within the display area (910), wherein said displaying the lung comprises displaying the left and right lungs separately according to their respective calculated zoom-factor and panning position.

2.  A method according to claim 1 wherein the zoom-factor and the panning position are automatically calculated during import of the lung within a database (912).

3.  A method according to claim 1, wherein displaying the lung and/or the left and right lungs is automatically invoked through a user interface (800).

4.  A system (900) for displaying within a display area (910) a symmetric anatomical structure (108) comprises two sub-structures that are substantially symmetrical to each other, wherein the anatomical structure is a lung and the sub-structures are the left and right lungs and wherein the lung is comprised within a 3D volumetric dataset comprising a stack of slices (302, 304, 306, 208, 310),
    the system being configured to
    segment parenchyma of the lung from the 3D volumetric data set to obtain a binary volumetric data set in which voxels contributing to the parenchyma of the lung have a first value and voxels not contributing to the parenchyma of the lung have a different second value, and

to process the binary volumetric dataset to determine a separation position in between the left and right lungs, the processing comprising generating a profile of the lung, which corresponds to a histogram of the number of voxels contributing to the parenchyma of the lung as a function of an x-position in the binary volumetric dataset, and determining the separation position between two peaks of the profile;

the system comprising:

- a calculator (902) for

- automatically calculating a zoom-factor for the lung for each slice of the stack of slices based upon the display area; and for
- automatically calculating a panning position for the lung for each slice of the stack of slices based upon the display area; and said calculator is further for automatically calculating the zoom-factor and the panning position for each of the left and right lungs separately starting from the separation position,

wherein the calculator is configured to compute the zoom-factor (210, 218, 220) and the panning position (206) for each of the left and right lungs to fit the respective left or right lung in the display area and to compute the zoom-factor for each of the left and right lungs to zoom as much as possible while displaying the entire left or right lung; and wherein the system further comprises

- a displayer (902) for displaying the lung according to the calculated zoom-factor and panning position within the display area; and said displayer is further for displaying the left and right lungs separately according to their respective calculated zoom-factor and panning position.

5. A system according to claim 4, further comprising an importer (902) for automatically calculating the zoom-factor and the panning position during import of the lung within a database.

6. A system according to any one of claims 4 to 5, further comprising a user interface (800) for automatically invoking displaying the lung and/or the left and right lungs.

7. A medical imaging workstation comprising the system according to any one of the claims 4 to 6.

8. A computer program product to be loaded by a computer arrangement, comprising instructions for displaying within a display area a symmetric anatomical structure comprising two sub-structures that are substantially symmetrical to each other, wherein the anatomical structure is a lung and the sub-structures are the left and right lungs and wherein the lung is comprised within a 3D volumetric dataset comprising a stack of slices (302, 304, 306, 208, 310), the computer arrangement comprising a processing unit and a memory, the computer program product, after being loaded, providing said processing unit with the capability to carry out the following tasks:

- segmenting parenchyma of the lung from the 3D volumetric data set to obtain a binary volumetric data set in which voxels contributing to the parenchyma of the lung have a first value and voxels not contributing to the parenchyma of the lung having a different second value;
- processing the binary volumetric dataset to determine a separation position in between the left and right lungs, the processing comprising generating a profile of the lung, which corresponds to a histogram of the number of voxels contributing to the parenchyma of the lung as a function of an x-position in the binary volumetric dataset, and determining the separation position between two peaks of the profile;
- automatically calculating a zoom-factor for the lung for each slice of the stack of slices based upon the display area, wherein said automatically calculating a zoom-factor comprises automatically calculating a zoom-factor for each of the left and right lungs separately starting from the separation position;
- automatically calculating a panning position for the lung for each slice of the stack of slices based upon the display area wherein said automatically calculating a panning position comprises automatically calculating a panning position for each of the left and right lungs separately starting from the separation position,

wherein the zoom-factor (210, 218, 220) and the panning position (206) for each of the left and right lungs are computed to fit the respective left or right lung in the display area and the zoom-factor for each of the left and right lungs is computed to zoom as much as possible while displaying the entire left or right lung; and wherein the computer program product, after being loaded, further provides said processing unit with the capability to carry out the task of displaying the lung according to the calculated zoom-factor and panning position within the display area; wherein said displaying the lung comprises displaying the left and right lungs separately according to their respective calculated zoom-factor and panning position.

## Patentansprüche

1. Verfahren zum Anzeigen einer symmetrischen anatomischen Struktur (108) in einem Anzeigebereich (910), wobei die symmetrische anatomische Struktur zwei Unterstrukturen umfasst, die im Wesentlichen symmetrisch zueinander sind, wobei die anatomische Struktur eine Lunge ist und die Unterstrukturen der linke und der rechte Lungenflügel sind, und wobei die Lunge in einem 3D-Volumendatensatz enthalten ist, der einen Stapel von Schichten (302, 304, 306, 208, 310) umfasst, wobei das Verfahren Folgendes umfasst:

   Segmentieren des Lungenparenchyms aus dem 3D-Volumendatensatz, um einen binären Volumendatensatz zu erhalten, in dem Voxel, die zu dem Lungenparenchym beitragen, einen ersten Wert aufweisen, und Voxel, die nicht zu dem Lungenparenchym beitragen, einen sich unterscheidenden zweiten Wert aufweisen;
   Verarbeiten des binären Volumendatensatzes, um eine Trennposition zwischen dem linken und dem rechten Lungenflügel zu bestimmen, wobei das Verarbeiten das Erzeugen eines Lungenprofils, das einem Histogramm der zu dem Lungenparenchym beitragenden Anzahl von Voxeln als eine Funktion einer x-Position in dem binären Volumendatensatz entspricht, und das Bestimmen der Trennposition zwischen zwei Profilpeaks umfasst,
   automatisches Berechnen eines Zoomfaktors (210, 218, 220) für die Lunge für jede Schicht des Schichtstapels basierend auf dem Anzeigebereich, wobei das genannte automatische Berechnen eines Zoomfaktors das automatische Berechnen eines Zoomfaktors für jeden von dem linken und dem rechten Lungenflügel separat ausgehend von der Trennposition umfasst; und
   automatisches Berechnen einer Schwenkposition (206) für die Lunge für jede Schicht des Schichtstapels basierend auf dem Anzeigebereich, wobei das genannte automatische Berechnen einer Schwenkposition das automatische Berechnen einer Schwenkposition für jeden von dem linken und dem rechten Lungenflügel separat ausgehend von der Trennposition umfasst;
   wobei der Zoomfaktor (210, 218, 220) und die Schwenkposition (206) für jeden von dem linken und dem rechten Lungenflügel so berechnet werden, dass der jeweilige linke oder rechte Lungenflügel in den Anzeigebereich passt, und der Zoomfaktor für jeden von dem linken und dem rechten Lungenflügel so berechnet wird, dass so weit wie möglich gezoomt wird, während der gesamte linke oder rechte Lungenflügel angezeigt wird; und
   wobei das Verfahren ferner das Anzeigen der Lunge (108) entsprechend dem berechneten Zoomfaktor und der berechneten Schwenkposition in dem Anzeigebereich (910) umfasst, wobei das genannte Anzeigen der Lunge das Anzeigen des linken und des rechten Lungenflügels separat entsprechend ihrem jeweiligen berechneten Zoomfaktor und der berechneten Schwenkposition umfasst.

2. Verfahren nach Anspruch 1, wobei der Zoomfaktor und die Schwenkposition automatisch während des Importierens der Lunge in eine Datenbank (912) berechnet werden.

3. Verfahren nach Anspruch 1, wobei das Anzeigen der Lunge und/oder des linken und des rechten Lungenflügels automatisch durch eine Benutzerschnittstelle (800) hervorgerufen wird.

4. System (900) zum Anzeigen einer symmetrischen anatomischen Struktur (108) in einem Anzeigebereich (910), wobei die symmetrische anatomische Struktur zwei Unterstrukturen umfasst, die im Wesentlichen symmetrisch zueinander sind, wobei die anatomische Struktur eine Lunge ist und die Unterstrukturen der linke und der rechte Lungenflügel sind, und wobei die Lunge in einem 3D-Volumendatensatz enthalten ist, der einen Stapel von Schichten (302, 304, 306, 208, 310) umfasst,
   wobei das System konfiguriert ist zum:

   Segmentieren des Lungenparenchyms aus dem 3D-Volumendatensatz, um einen binären Volumendatensatz zu erhalten, in dem Voxel, die zu dem Lungenparenchym beitragen, einen ersten Wert aufweisen, und Voxel, die nicht zu dem Lungenparenchym beitragen, einen sich unterscheidenden zweiten Wert aufweisen;
   Verarbeiten des binären Volumendatensatzes, um eine Trennposition zwischen dem linken und dem rechten Lungenflügel zu bestimmen, wobei das Verarbeiten das Erzeugen eines Lungenprofils, das einem Histogramm der zu dem Lungenparenchym beitragenden Anzahl von Voxeln als eine Funktion einer x-Position in dem binären Volumendatensatz entspricht, und das Bestimmen der Trennposition zwischen zwei Profilpeaks umfasst,
wobei das System Folgendes umfasst:

- eine Berechnungseinheit (902) zum

- automatischen Berechnen eines Zoomfaktors für die Lunge für jede Schicht des Schichtstapels basierend auf dem Anzeigebereich; und zum
- automatischen Berechnen einer Schwenkposition für die Lunge für jede Schicht des Schichtstapels basierend auf dem Anzeigebereich; und wobei die Berechnungseinheit ferner zum automatischen Berechnen des Zoomfaktors und der Schwenkposition für jeden von dem linken und dem rechten Lungenflügel separat ausgehend von der Trennposition dient;

wobei die Berechnungseinheit konfiguriert ist, um den Zoomfaktor (210, 218, 220) und die Schwenkposition (206) für jeden von dem linken und dem rechten Lungenflügel so berechnet werden, dass der jeweilige linke oder rechte Lungenflügel in den Anzeigebereich passt, und der Zoomfaktor für jeden von dem linken und dem rechten Lungenflügel so berechnet wird, dass so weit wie möglich gezoomt wird, während der gesamte linke oder rechte Lungenflügel angezeigt wird; und
wobei das System ferner Folgendes umfasst:

- eine Anzeigeeinheit (902) zum Anzeigen der Lunge entsprechend dem berechneten Zoomfaktor und der berechneten Schwenkposition in dem Anzeigebereich; und wobei die genannte Anzeigeeinheit ferner zum Anzeigen des linken und des rechten Lungenflügels separat entsprechend ihrem jeweiligen berechneten Zoomfaktor und der berechneten Schwenkposition dient.

5. System nach Anspruch 4, ferner umfassend eine Importiereinheit (902) zum automatischen Berechnen des Zoomfaktors und der Schwenkposition während des Importierens der Lunge in eine Datenbank.

6. System nach einem der Ansprüche 4 bis 5, ferner umfassend eine Benutzerschnittstelle (800) zum automatischen Hervorrufen des Anzeigens der Lunge und/oder des linken und des rechten Lungenflügels.

7. Medizinisches bildgebende Workstation umfassend das System nach einem der Ansprüche 4 bis 6.

8. Computerprogrammprodukt, das durch eine Computeranordnung zu laden ist, umfassend Anweisungen zum Anzeigen einer symmetrischen anatomischen Struktur in einem Anzeigebereich, wobei die symmetrische anatomische Struktur zwei Unterstrukturen umfasst, die im Wesentlichen symmetrisch zueinander sind, wobei die anatomische Struktur eine Lunge ist und die Unterstrukturen der linke und der rechte Lungenflügel sind, und wobei die Lunge in einem 3D-Volumendatensatz enthalten ist, der einen Stapel von Schichten (302, 304, 306, 208, 310) umfasst, wobei die Computeranordnung eine Verarbeitungseinheit und einen Speicher umfasst, wobei das Computerprogrammprodukt, nachdem es geladen wurde, der genannten Verarbeitungseinheit die Fähigkeit verleiht, die folgenden Aufgaben auszuführen:

- Segmentieren des Lungenparenchyms aus dem 3D-Volumendatensatz, um einen binären Volumendatensatz zu erhalten, in dem Voxel, die zu dem Lungenparenchym beitragen, einen ersten Wert aufweisen, und Voxel, die nicht zu dem Lungenparenchym beitragen, einen sich unterscheidenden zweiten Wert aufweisen;
- Verarbeiten des binären Volumendatensatzes, um eine Trennposition zwischen dem linken und dem rechten Lungenflügel zu bestimmen, wobei das Verarbeiten das Erzeugen eines Lungenprofils, das einem Histogramm der zu dem Lungenparenchym beitragenden Anzahl von Voxeln als eine Funktion einer x-Position in dem binären Volumendatensatz entspricht, und das Bestimmen der Trennposition zwischen zwei Profilpeaks umfasst,
- automatisches Berechnen eines Zoomfaktors für die Lunge für jede Schicht des Schichtstapels basierend auf dem Anzeigebereich, wobei das genannte automatische Berechnen eines Zoomfaktors das automatische Berechnen eines Zoomfaktors für jeden von dem linken und dem rechten Lungenflügel separat ausgehend von der Trennposition umfasst;
- automatisches Berechnen einer Schwenkposition für die Lunge für jede Schicht des Schichtstapels basierend auf dem Anzeigebereich, wobei das genannte automatische Berechnen einer Schwenkposition das automatische Berechnen einer Schwenkposition für jeden von dem linken und dem rechten Lungenflügel separat ausgehend von der Trennposition umfasst;

wobei der Zoomfaktor (210, 218, 220) und die Schwenkposition (206) für jeden von dem linken und dem rechten Lungenflügel so berechnet werden, dass der jeweilige linke oder rechte Lungenflügel in den Anzeigebereich passt, und der Zoomfaktor für jeden von dem linken und dem rechten Lungenflügel so berechnet wird, dass so weit wie möglich gezoomt wird, während der gesamte linke oder rechte Lungenflügel angezeigt wird; und

wobei das Computerprogrammprodukt, nachdem es geladen wurde, ferner der genannten Verarbeitungseinheit die Fähigkeit verleiht, die Aufgabe des Anzeigens der Lunge entsprechend dem berechneten Zoomfaktor und der berechneten Schwenkposition in dem Anzeigebereich auszuführen, wobei das genannte Anzeigen der Lunge das Anzeigen des linken und des rechten Lungenflügels separat entsprechend ihrem jeweiligen berechneten Zoomfaktor und der berechneten Schwenkposition umfasst.

**Revendications**

1. Procédé d'affichage dans une zone d'affichage (910) d'une structure anatomique symétrique (108) comprenant deux sous-structures qui sont sensiblement symétriques l'une par rapport à l'autre, dans lequel la structure anatomique est un poumon et les sous-structures sont les poumons gauche et droit, dans lequel le poumon est compris dans un ensemble de données volumétriques 3D comprenant un empilement de tranches (302, 304, 306, 208, 310), le procédé comprenant les étapes consistant à :

   segmenter le parenchyme du poumon à partir de l'ensemble de données volumétriques 3D pour obtenir un ensemble de données volumétriques binaires dans lequel des voxels contribuant au parenchyme du poumon ont une première valeur et des voxels ne contribuant pas au parenchyme du poumon ont une seconde valeur différente ;

   traiter l'ensemble de données volumétriques binaires pour déterminer une position de séparation entre les poumons gauche et droit, le traitement comprenant les étapes consistant à générer un profil du poumon, qui correspond à un histogramme du nombre de voxels contribuant au parenchyme du poumon en fonction d'une position x dans l'ensemble de données volumétriques binaires, et déterminer la position de séparation entre deux pics du profil,

   calculer automatiquement un facteur de zoom (210, 218, 220) pour le poumon pour chaque tranche de l'empilement de tranches sur la base de la zone d'affichage, dans lequel ledit calcul automatique d'un facteur de zoom comprend le calcul automatique d'un facteur de zoom pour chacun des poumons gauche et droit séparément à partir de la position de séparation ; et

   - calculer automatiquement une position de panoramique (206) pour le poumon pour chaque tranche de l'empilement de tranches sur la base de la zone d'affichage, dans lequel ledit calcul automatique d'une position de panoramique comprend le calcul automatique d'une position de panoramique pour chacun des poumons gauche et droit séparément à partir de la position de séparation ;

   dans lequel le facteur de zoom (210, 218, 220) et la position de panoramique (206) de chacun des poumons gauche et droit sont calculés pour s'ajuster au poumon gauche ou droit respectif dans la zone d'affichage et le facteur de zoom pour chacun des poumons gauche et droit est calculé pour zoomer autant que possible tout en affichant le poumon gauche ou droit entier ; et

   dans lequel le procédé comprend en outre l'affichage du poumon (108) en fonction du facteur de zoom et de la position de panoramique calculés dans la zone d'affichage (910), dans lequel ledit affichage du poumon comprend l'affichage des poumons gauche et droit séparément en fonction de leur facteur de zoom et de leur position de panoramique calculés respectifs.

2. Procédé selon la revendication 1, dans lequel le facteur de zoom et la position de panoramique sont calculés automatiquement lors de l'importation du poumon dans une base de données (912).

3. Procédé selon la revendication 1, dans lequel l'affichage du poumon et/ou des poumons gauche et droit est appelé automatiquement via une interface utilisateur (800).

4. Système (900) pour afficher dans une zone d'affichage (910) une structure anatomique symétrique (108) qui comprend deux sous-structures sensiblement symétriques l'une par rapport à l'autre, dans lequel la structure anatomique est un poumon et les sous-structures sont les poumons gauche et droit et dans lequel le poumon est compris dans un ensemble de données volumétriques 3D comprenant un empilement de tranches (302, 304, 306, 208, 310), le système étant configuré pour

segmenter le parenchyme du poumon à partir de l'ensemble de données volumétriques 3D afin d'obtenir un ensemble de données volumétriques binaires dans lequel des voxels contribuant au parenchyme du poumon ont une première valeur et des voxels ne contribuant pas au parenchyme du poumon ont une seconde valeur différente, et traiter l'ensemble de données volumétriques binaires pour déterminer une position de séparation entre les poumons gauche et droit, le traitement comprenant les étapes consistant à générer un profil du poumon, qui correspond à un histogramme du nombre de voxels contribuant au parenchyme du poumon en fonction d'une position x dans l'ensemble de données volumétriques binaires, et déterminer la position de séparation entre deux pics du profil ; le système comprenant :

- un calculateur (902) pour

- calculer automatiquement un facteur de zoom pour le poumon pour chaque tranche de l'empilement de tranches sur la base de la zone d'affichage ; et
- calculer automatiquement une position de panoramique pour le poumon pour chaque tranche l'empilement de tranches sur la base de la zone d'affichage ; et ledit calculateur est en outre destiné à calculer automatiquement le facteur de zoom et la position de panoramique pour chacun des poumons gauche et droit séparément à partir de la position de séparation,

dans lequel le calculateur est configuré pour calculer le facteur de zoom (210, 218, 220) et la position de panoramique (206) pour chacun des poumons gauche et droit afin de s'ajuster au poumon gauche ou droit respectif dans la zone d'affichage et pour calculer le facteur de zoom pour chaque poumon gauche et droit afin de zoomer autant que possible tout en affichant le poumon gauche ou droit entier ; et
dans lequel le système comprend en outre

- un dispositif d'affichage (902) pour afficher le poumon en fonction du facteur de zoom et de la position de panoramique calculés dans la zone d'affichage ; et ledit dispositif d'affichage est en outre destiné à afficher les poumons gauche et droit séparément en fonction de leur facteur de zoom et de leur position de panoramique calculés respectifs.

5. Système selon la revendication 4, comprenant en outre un dispositif d'importation (902) pour calculer automatiquement le facteur de zoom et la position de panoramique lors de l'importation du poumon dans une base de données.

6. Système selon l'une quelconque des revendications 4 à 5, comprenant en outre une interface utilisateur (800) pour appeler automatiquement l'affichage du poumon et/ou des poumons gauche et droit.

7. Poste de travail d'imagerie médicale comprenant le système selon l'une quelconque des revendications 4 à 6.

8. Produit programme informatique à charger par un agencement d'ordinateur, comprenant des instructions pour afficher dans une zone d'affichage une structure anatomique symétrique comprenant deux sous-structures qui sont sensiblement symétriques l'une par rapport à l'autre, dans lequel la structure anatomique est un poumon et les sous-structures sont les poumons gauche et droit, et dans lequel le poumon est compris dans un ensemble de données volumétriques 3D comprenant un empilement de tranches (302, 304, 306, 208, 310), l'agencement d'ordinateur comprenant une unité de traitement et une mémoire, le produit programme informatique, après avoir été chargé, dotant ladite unité de traitement de la capacité d'accomplir les tâches suivantes :

- segmenter le parenchyme du poumon à partir de l'ensemble de données volumétriques 3D pour obtenir un ensemble de données volumétriques binaires dans lequel des voxels contribuant au parenchyme du poumon ont une première valeur et des voxels ne contribuant pas au parenchyme du poumon ont une seconde valeur différente ;
- traiter l'ensemble de données volumétriques binaires pour déterminer une position de séparation entre les poumons gauche et droit, le traitement comprenant les étapes consistant à générer un profil du poumon, qui correspond à un histogramme du nombre de voxels contribuant au parenchyme du poumon en fonction d'une position x dans l'ensemble de données volumétriques binaires, et déterminer la position de séparation entre deux pics du profil,
- calculer automatiquement un facteur de zoom pour le poumon pour chaque tranche de l'empilement de tranches sur la base de la zone d'affichage, dans lequel ledit calcul automatique d'un facteur de zoom comprend le calcul automatique d'un facteur de zoom pour chacun des poumons gauche et droit séparément à partir de la position de séparation ; et

- calculer automatiquement une position de panoramique pour le poumon pour chaque tranche de l'empilement de tranches sur la base de la zone d'affichage, dans lequel ledit calcul automatique d'une position de panoramique comprend le calcul automatique d'une position de panoramique pour chacun des poumons gauche et droit séparément à partir de la position de séparation ;

- dans lequel le facteur de zoom (210, 218, 220) et la position de panoramique (206) de chacun des poumons gauche et droit sont calculés pour s'ajuster au poumon gauche ou droit respectif dans la zone d'affichage et le facteur de zoom pour chacun des poumons gauche et droit est calculé pour zoomer autant que possible tout en affichant le poumon gauche ou droit entier ; et

- dans lequel le produit programme informatique, après avoir été chargé, dote en outre ladite unité de traitement de la capacité d'effectuer la tâche consistant à afficher le poumon en fonction du facteur de zoom et de la position de panoramique calculés dans la zone d'affichage ; dans lequel ledit affichage du poumon comprend l'affichage des poumons gauche et droit séparément en fonction de leur facteur de zoom et de leur position de panoramique calculés respectifs.

FIG. 1

202 — INIT

204 — BOUNDING BOX

206 — COMPUTE $X_s$

210

208 — $L_x = L_y?$ —Y→ [ ]

N

214          216

212 — $L_x > L_y?$ —Y→ $O_x > O_y?$ —Y→ $O_x > L_x?$ —Y→ 218

N          N          N

222 — $O_x > O_y?$ —N→ 224 $O_y > L_y?$ —Y→ 220

Y          N

226 — END

# FIG. 2

**FIG. 3**

**FIG. 4**

FIG. 5

FIG. 6

FIG. 7a

FIG. 7b

FIG. 7c

FIG. 7d

FIG. 8

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050259882 A

**Non-patent literature cited in the description**

- **M. P. REVEL ; D. PETROVER ; A. HERNIGOU ; C. LEFORT ; G. MEYER ; G. FRIJA.** Diagnosing Pulmonary Embolism with Four-Detector Row Helical CT: Prospective Evaluation of 216 Outpatients and Inpatients. *Radiology,* 2005, vol. 234, 265-273

- **T. BÜLOW ; R.WIEMKER ; T. BLAFFERT ; C. LORENZ ; S. RENISCH.** Automatic Extraction of the Pulmonary Artery Tree from Multi-Slice CT Data. SPIE, 2005, vol. 5746, 730-740